# EUROPEAN PATENT APPLICATION

(11) **EP 0 921 378 A2**
(43) Date of publication of application: **09.06.1999**
(21) Application number: 98850169.8
(22) Date of filing: 03.11.1998
(51) Int. Cl.: G01F 25/00

(54) **Method for localising errors in a flow meter**

(30) Priority: 11.11.1997 SE 9704131
(71) Applicant: Nilsson, Ulf R. C., 224 72 Lund (SE)
(72) Inventor: Nilsson, Ulf R.C., 224 72 Lund (SE); Delsing, Jerker, 241 20 Löddeköpinge (SE)
(74) Representative: Bjerre, Nils B.J.

(57) **Abstract**

The invention concerns a method for detecting misbehaviour of a mechanically based flow meter. The method comprises the steps of
- reading a primary flow signal of the flow meter several times per mechanical cycle;
- analysing the readings to find periodical, time-dependent variations;
- producing a current representation of the variations; and
- comparing the current representation with a corresponding normal representation which represents correctly operating meters of the same type, and detecting significant differences, if any.

## Description

### Field of the Invention

The present invention relates generally to localising faults in flow meters, and more specifically to a method according to the preamble to claim 1.

### Background Art

In a distribution system used by a distributor for conducting to a consumer a fluid, i.e. a gas or a liquid, from which energy is recovered, use is made of flow meters at the consumers' place to determine the amount of energy consumed. Such a system can be, for instance, an energy distribution system in a town or a system for supplying energy to an industrial plant. Each consumer pays the distributor for the measured energy consumption. The distributor as well as the consumer are anxious for the measurement of the consumption to be correct. There is thus a need to check, at certain intervals, the function of the meters, ensuring accurate measurement.

A prior-art method for checking a flow meter implies that the meter is removed and tested in a special test bench with well controlled and calibrated flows. This method is complicated, time-consuming and expensive. A better method is checking in situ. Such a method implies that a calibrated meter is connected in series with the consumer's meter and the values of the meters are compared. This method is also time-consuming since it involves mounting and dismounting work in the flow path, and is thus expensive. Another in-situ method implies that radioactive gas is supplied through the meter, mainly for the purpose of tracing leakage. It goes without saying that this method is not applicable in, for instance, houses and flats.

All the above-mentioned prior-art methods are disadvantageous since they are too expensive or in other ways unsuitable for use on meters in houses and flats. The cost aspect is decisive since the great majority of meters are installed with small consumers. With bulk consumers, such as industries, the check cost is a smaller problem, and therefore the meters can be checked with a certain amount of continuity. Nevertheless it is a considerable drawback that the prior-art methods are time-consuming and complicated.

As an example it may be mentioned that 43,000 of the approximately 50,000 meters in Swedish gas distribution systems are of the small type used in houses and flats. Owing to the high check cost, the meters are not checked at all, are checked with insufficient frequency, or are exchanged although they operate well since after all it is less expensive to exchange them after a certain number of years than to check whether they are still measuring correctly.

Consequently it is desirable to find a method which is considerably easier and cheaper.

### Summary of the Invention

An object of the invention is to provide a method for checking mechanically based flow meters, said method being simple and cost-effective, thus making it profitable to check the meters with sufficient frequency to keep them faultless.

The object is achieved by the method set forth in claim 1. Advantageous embodiments of the invention are defined in the subclaims.

The invention concerns a method for checking mechanically based flow meters. By mechanically based is here meant a meter which has a moving mechanism which is operated by the fluid flowing through the meter. That is not to say that the entire meter is mechanical, but it may also comprise electric components.

According to the invention, the primary flow signal of the flow meter is read and analysed. The primary flow signal is the direct, unfiltered and unprocessed output signal from the meter mechanism operated by the flow. The signal is used to operate the measuring unit directly or indirectly. The signal is obtained from e.g. the rotary output shaft of the flow meter, i.e. the shaft to which the actual measuring unit is connected and by which it is directly or indirectly operated. The analysis shows signal variations caused by misbehaviour, such as leakage and excessive friction. These types of misbehaviour result in incorrect measurement of the flow. The flow causes energy consumption in the above-described case of an energy distribution system. In other contexts where the method according to the invention is also applicable, such as in an industrial process, the flow can represent the amount of component added or the amount of water consumed. The misbehaviour causes an irregular mechanical motion of the meter, said motion propagating to the rotation of the shaft and being readable as a variation in the signal. The variation frequently occurs as braking of the shaft during parts of a revolution.

The variations are different depending on the type of misbehaviour that is involved. Therefore the representation of the variations is unique for a certain type of misbehaviour. This means that the comparison with a normal representation produces an adequate picture of any deviations from the normal representation which are caused by misbehaviour.

The normal representation is prepared by testing a plurality of meters that are known to be correct. The comparison between the representation and the normal representation indicates directly whether the meter has a defect that affects the measurement of the flow.

According to an advantageous embodiment of the inventive method as defined in claim 3, a generation of pulses is achieved, which is connected to the geometrically covered part of a revolution and which is independent of time. Consequently the time is usable as a detector to register irregularities, which become apparent as periods of different length.

According to an advantageous embodiment as defined in claim 4, a representation is produced, which is easy to interpret and compare with the normal representation.

### Brief Description of the Drawings

The invention and further advantages thereof will now be described in more detail by way of embodiments with reference to the accompanying drawings, in which
Fig. 1 is a schematic cross-section of a positive displacement gas meter,
Fig. 2 shows schematically an experimental set-up for carrying out experiments in accordance with the inventive method;
Fig. 3 illustrates a notion of time; and
Figs 4-10 illustrate representations of test results, which have been achieved by means of the set-up in Fig. 2.

### Description of Embodiments

As described by way of introduction, the inventive method is particularly advantageous for energy distribution systems, in which the energy-carrying medium is a gas or liquid distributed by a distributor via conduits to individual consumers. The consumers use the medium exclusively or mostly for heating, for instance, industrial premises, a house or a flat. The method will particularly do itself justice when applied to small flow meters used in houses and flats since the problems of achieving profitability in the checking of the accuracy of the meters are particularly to be found there and are excellently solved by using the method.

In the following description, the inventive method is exemplified as applied to flow meters for measuring gas flows, the meter being a positive displacement gas meter. The invention is, of course, applicable to other types of mechanically based flow meters, such as turbine meters and rotary piston meters.

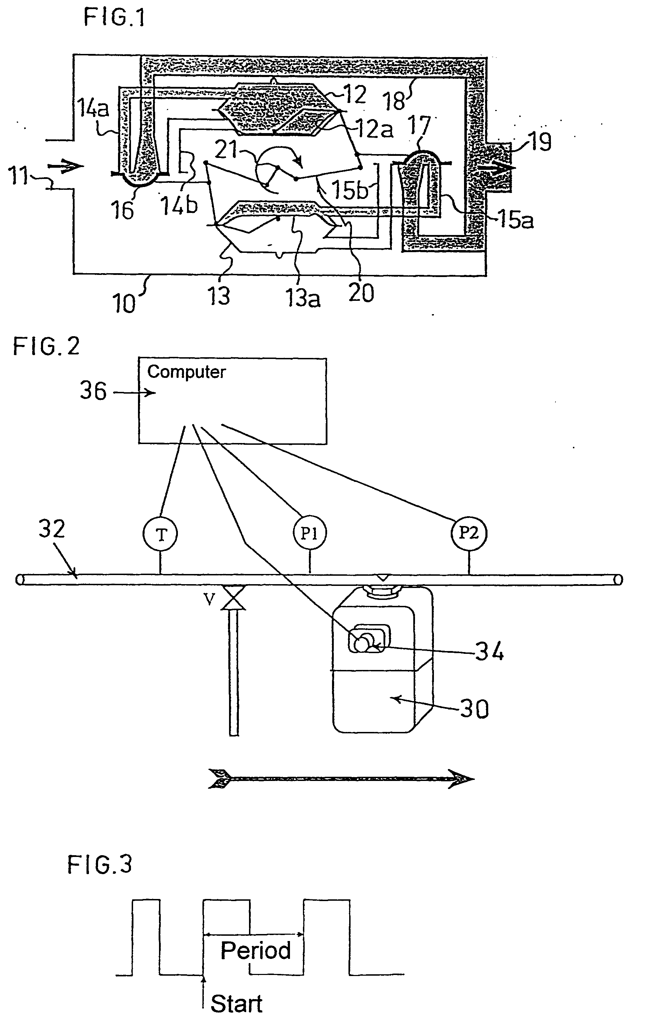

The positive displacement gas meter shown in Fig. 3 in rough outline comprises a closed casing 10 forming a main chamber, to which the gas is supplied via an inlet 11. The meter has two measuring chambers 12, 13 each containing its own bellows 12a, 13a. Each chamber 12, 13 has two inlet and outlet tubes 14a, 14b, and 15a, 15b, respectively, the openings of which are connected by means of valves 16, 17 alternately to the main chamber and an outlet tube 18 which leads into an outlet 19 of the meter. The valves 16, 17 and the bellows 12a, 13a are interconnected via a common link system 20. The gas flow passes the meter via the measuring chambers 12, 13, the tubes 14a, b; 15a, b; and 18. The gas fills the measuring chambers 12, 13 from alternately one and the other side of each bellows 12a, 13a via alternately the one 14a, 15a and the other 14b, 15b tube of the measuring chambers 12, 13, the reciprocating motions of the bellows 12a, 13a operating valve movements and the output shaft 21 of the meter, said shaft being mounted in the centre of the rotating link system 20.

A flow meter like the positive displacement gas meter shown in Fig. 1 is above all subjected to two types of faults causing the meter to lose its accuracy and measure incorrectly. A first type of fault is faults caused by altered physical properties, and a second type of fault is faults caused by an incorrect function. Variations in pressure belong to the first type of fault. The second type of fault includes leakage, geometric variations and mechanical faults.

A preferred embodiment of the inventive method will now be described in more detail. To facilitate the understanding, the description will be made along with results from an experimental set-up used to verify the applicability of the invention. The set-up as shown in Fig. 3 comprises a positive displacement gas meter 30, such as the one schematically shown in Fig. 1, which is installed in a gas conduit 32. The set-up further comprises three meters connected to the gas conduit 32: one thermometer T, a first pressure gauge P1, which seen in the direction of the flow of gas is mounted before the positive displacement gas meter 30, a second pressure gauge P2, which is mounted after the meter 30, and a valve V, which is mounted before the first pressure gauge and is used to simulate leakage. It should be emphasised that in actual use of the method it is not necessary to install the valve V and the meters T, P1, P2. Instead the inventive method is advantageous precisely because it is not necessary to interfere with the path of flow, which will be evident from the following.

According to this embodiment of the invention, the primary flow signal is read by means of a pulse generating means 34 mounted on the output shaft of the meter 30. The shaft makes one revolution for each mechanical cycle, or working cycle, of the meter 30 and is normally used to operate the actual counter in the meter 30. The pulse generating means 34 is a so-called angle decoder 34 which generates 100 pulses for each revolution. The resolution of the primary flow signal, i.e. the number of pulses per revolution, must be so high as to allow parts of the mechanical cycle to be detected. This will be evident from the following. The angle decoder 34 is connected to a counter which records the front edge of each pulse, which below is referred to as starting edge, see Fig. 3. The angular distance between two pulses is equidistant. In other words, the angle of rotation between two successive pulses, i.e. between their front edges, is constant.

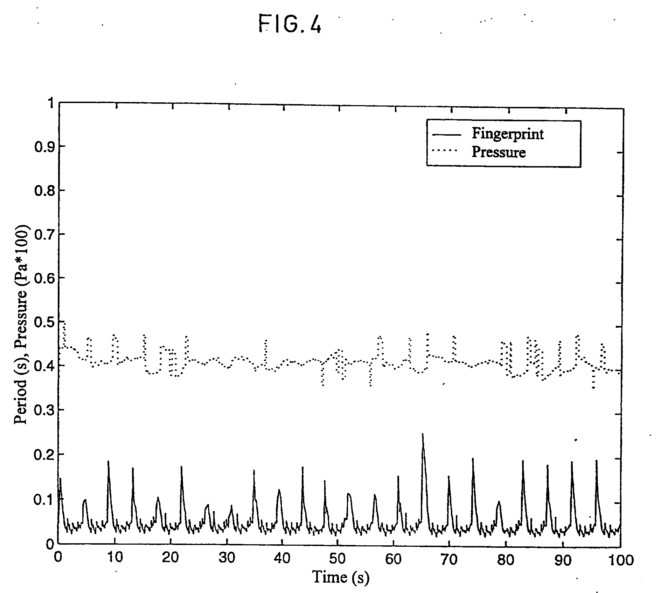

The pulse signal thus generated by the angle decoder and the counter is supplied to a signal processing unit, in the experimental set-up, a computer 36. A unique period is determined for each pulse by means of the computer 36. The period is the time between the starting edge of the pulse and the starting edge of the preceding pulse. Periods are determined and stored by the computer 36 during a preselected period of time or a preselected number of revolutions, which below is referred to as test sequence. Then the periods produce a representation, which in this embodiment is a diagram where the periods are plotted in y direction and the time passed from the beginning of the test sequence is plotted in x direction. This results in a diagram of the type shown in Figs 4, 5, 7, 9 and 10. In these Figures, the variations in periods are indicated by a full line. Moreover a dotted line indicates the pressure drop over the meter 30, i.e. the difference between the gas pressure at P1 and the gas pressure at P2. This is determined essentially continuously. The unit of the x axis in the diagrams is seconds (s). The y axis has on the one hand the unit seconds (s) and, on the other hand, the unit Pascal*100 (Pa*100) since time as well as pressure are to be illustrated.

In all the cases shown, the test sequence was 60 revolutions. Part of this, viz. the first 100 seconds, is shown in the diagrams. The flow through the gas conduit was kept constant, which is normal in actual practice when operating a gas-fired boiler.

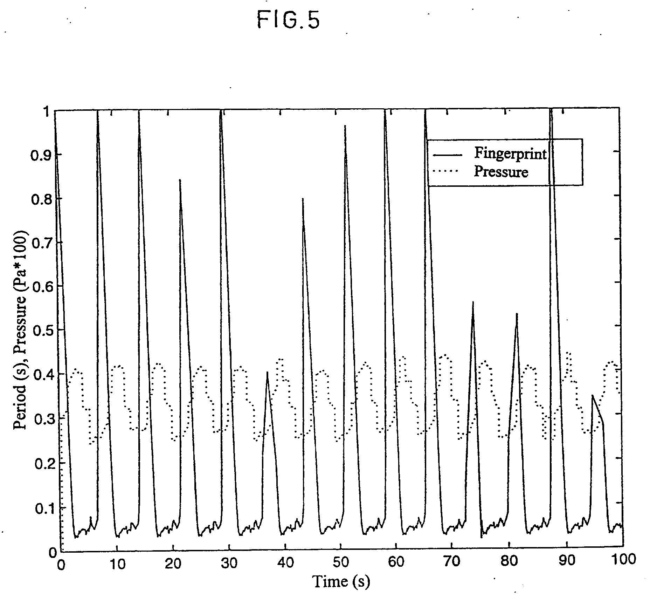

Fig. 4 shows the result of a new meter having full accuracy. Fig. 5 shows the result of a meter which has been used for quite a long time and has recorded a total flow of 10,500 m³. It may be established that the rotation of the new meter is even and that there is one peak per revolution. It should also be noted that the pressure drop is fairly constant. The same basic pattern can be seen in the diagram for the used meter, but the peaks are higher and the curve drops after each high peak. It should be noted at the same time that the pressure drop varies in a sinusoidal manner. This indicates that the rotation stops once per revolution owing to the increased friction to which the bearing is subjected. In that period the pressure is built up, which results in extra rapid rotation for a short period of time after the friction has been overcome. Hence the drop of the curve. The curve of the variations of the periods is below referred to as fingerprints since it has an individual appearance that varies to a greater or smaller degree from meter to meter. For meters with equivalent properties, such as new meters, the individual variations, however, are small. This provides the possibility of determining different types of faults based on the appearance of the fingerprint.

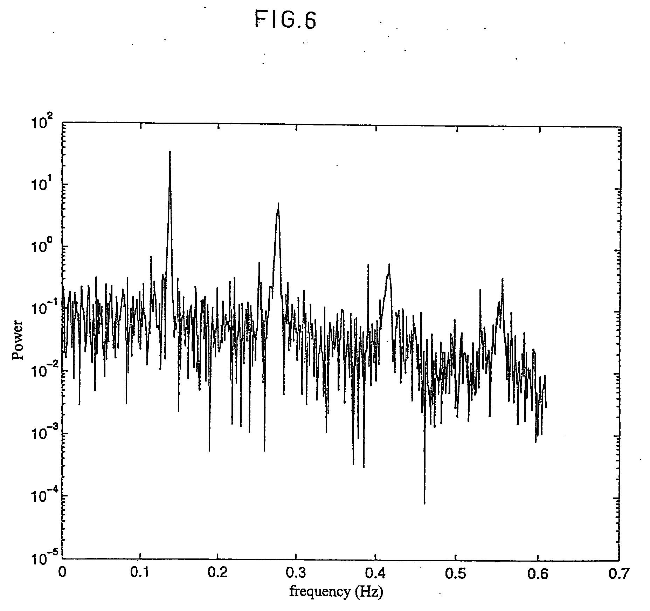

If the fingerprint in Fig. 5 is transformed into the frequency plane using FFT, the spectrum in Fig. 6 is obtained. It shows a peak at the rotation frequency and harmonics thereof, as can be expected from a signal with a large peak that returns periodically.

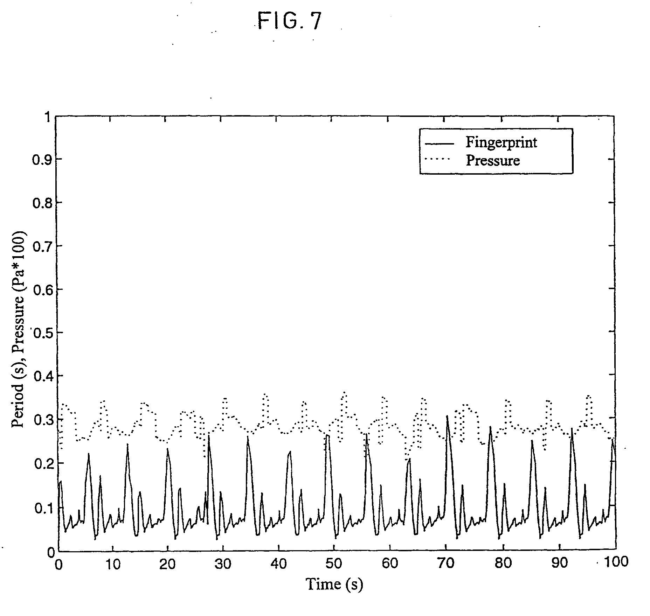

Fig. 7 shows another fingerprint which is caused by water in the measuring chamber of a meter 30, for instance 12 or 13 in Fig. 1. In the case shown, 50 ml of water had been introduced into one chamber. This fingerprint has four peaks per revolution instead of one. The reason is that the four peaks represent the four phases in the measuring cycle. The second peak in each group of four larger peaks represents the basic pattern, while the first peak depends on the additional force required to overcome the pressure exerted by the liquid in the measuring chamber. The other two peaks originate from equilibrium in the second chamber caused by the defect in the first chamber since the chambers are interconnected via a link system (see for instance Fig. 1).

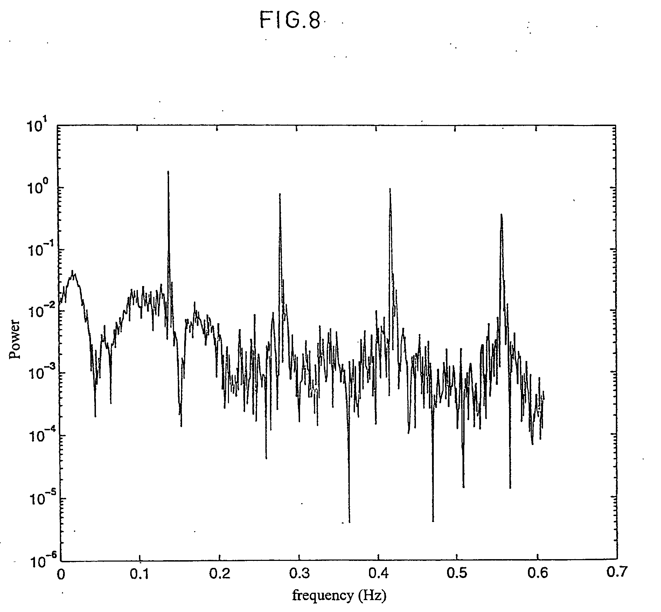

Fig. 8 shows the FFT diagram of the fingerprint in Fig. 7. It is obvious that the peaks have approximately the same power in contrast to the peaks in Fig. 6 which have a decreasing power with increasing frequency. The FFT diagram provides additional assistance in the assessment of the type of fault, i.e. which type of misbehaviour the meter exhibits.

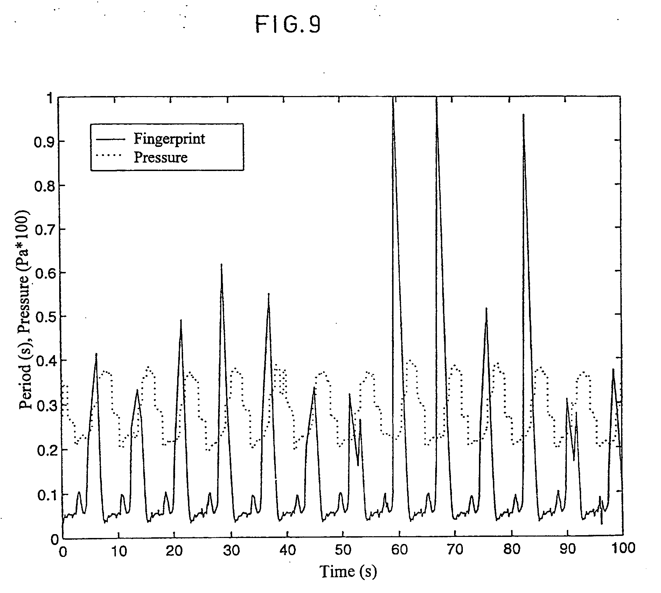

Fig. 9 shows the fingerprint of the same meter as in Fig. 5, but with a certain degree of controlled leakage, more specifically about 6% of the flow. The leakage was simulated by means of the valve V. In this case an extra peak arises just before each friction peak, which is also to be found in the normal fingerprint. The extra peak indicates an extra stop at the end of each revolution. The reason for the stop is the lower available pressure drop that depends on the fact that the leakage reduces the pressure which operates the mechanism. The gas flows through the leakage until the pressure drop over the leakage is equal to the pressure drop that is necessary for the movement of the meter, which starts again. This peak at about 60% of a cycle is common for all tests involving leakage. It should be emphasised that this peak cannot be seen in a frequency domain since it returns at the same frequency as the main peak. Reverting to the above reasoning in the matter of resolution, it may be established that the resolution must be fairly high for the extra peak to be detected.

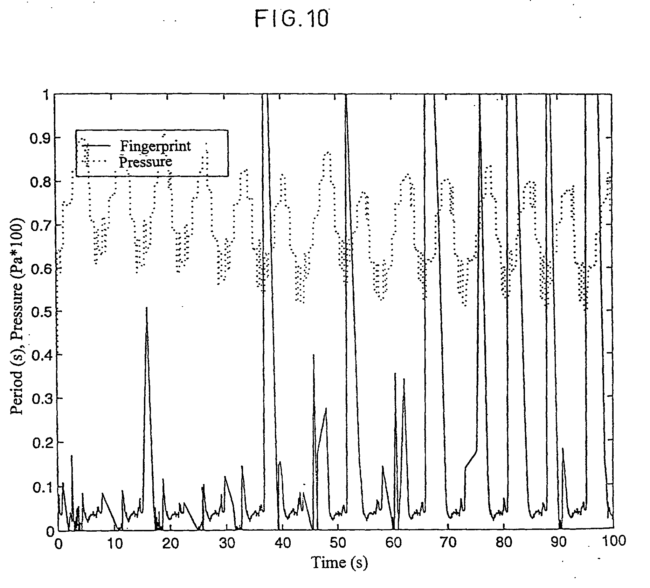

Fig. 10 shows the fingerprint of a meter subjected to increased friction. The increased friction is generated in the experimental set-up by means of a brake mechanism (not shown) which was arranged on the output shaft. A varying degree of brake force was applied to the shaft in different sequences to test how it affects the fingerprint. The gas flow remained constant, as is the case in actual practice when a gas-fired boiler is connected and in operation. Fig. 10 shows the result when a certain degree of brake force is applied. As a person skilled in the art can determine mathematically, the gas pressure depends on the friction and on the necessary torque. This is reflected in the pressure curve in the diagram in Fig. 10. More specifically, the increased friction results in an increased average pressure drop, but the variations in pressure do not change to any considerable extent, see Fig. 9 for comparison. The increased pressure drop also results in an increased volume when the bellows is filled. The actual fingerprint is affected as follows. The amplitude of the highest peaks increases, and the variations from revolution to revolution increase. In the case shown, the meter still worked, but with a great pressure drop. A further increased friction makes it stop working owing to the pressure drop being so great that the gas pressure becomes too low.

The test results described above originate from the experimental tests that were made on a small number of well-defined meters that had been tested by using other methods. However, the results have been verified by testing a large number of additional meters which, by means of tests in a calibrated test bench, have been determined to have measurement errors between -5% and -20%. The fingerprints of these meters exhibited the same pattern as the fingerprints shown in the Figures and originating from meters with simulated faults.

By the means of the inventive method it is thus possible to disclose misbehaviour in flow meters by performing a simple test, especially in the categories a) liquid in the chambers of the meter, b) leakage in the meter, and c) increased friction in the bearings. According to examinations performed, these categories represent most of the sources of errors. Each misbehaviour has its own special fingerprint or, in other words, its own deviation representation. It is possible to classify, with great safety, an abnormal fingerprint by comparing it with the various deviation representations.

According to the embodiment of the invention described above, it is decided whether the meter has a fault that may affect the accuracy of the measurement by visually assessing the fingerprint and comparing it with a known normal fingerprint of a meter with satisfactory measuring accuracy. If a fault is established, the fingerprint is compared with fingerprints mirroring typical faults. This requires a certain amount of training of the person who is to carry out the checking of the meter.

According to a further embodiment of the invention, a comparison is carried out by signal processing by means of a suitable device. The device represents the result on a display in the form of a text message or a deviation curve.

It should be mentioned that the angle decoder 34 and the computer 36 are advantageously assembled to a unit which is connectible to the output shaft of a meter 30 and which presents the fingerprints and other results directly on a display.

## Claims

1. A method for detecting misbehaviour of a mechanically based flow meter, **characterised** by the steps of
- reading a primary flow signal of the flow meter several times for each mechanical cycle;
- analysing the readings to find periodical, time-dependent variations;
- producing a current representation of the variations; and
- comparing the current representation with a corresponding normal representation which represents correctly operating meters of the same type and detecting any significant differences, if any.

2. A method as claimed in claim 1, **characterised** by the step of
- comparing, when significant differences exist, the current representation with deviation representations which are characteristic of a specific misbehaviour to determine whether the significant differences represent a specific misbehaviour.

3. A method as claimed in claim 1 or 2, **characterised** in that the reading of the primary flow signal comprises the steps of
- detecting by means of a pulse generator the rotation of an output shaft of the flow meter; and
- generating, by means of the pulse generator, a plurality of pulses for each revolution that the output shaft makes, the angular distance between two successive pulses being equidistant;
that the step of analysing the readings comprises the steps of detecting each new pulse and determining a period as the time between the new pulse and the preceding pulse; and
that the representation is a representation of the periods.

4. A method as claimed in claim 3, **characterised** by the steps of
- determining the periods during a sequence containing a plurality of revolutions; and
- forming the representation as a diagram of the period relative to the total time which, when the period arises, has passed after the commencement of the sequence.

5. A method as claimed in claim 4, **characterised** by the step of transforming the representation into a frequency domain.
